# EUROPÄISCHE PATENTSCHRIFT

(11) **EP 4 155 593 B1**
(45) Veröffentlichungstag und Bekanntmachung des Hinweises auf die Patenterteilung: **19.02.2025**
(21) Anmeldenummer: 22195078.5
(22) Anmeldetag: 12.09.2022
(51) Int. Cl.: F16K 31/122, F16K 31/524, B60G 17/052, B60G 17/056, F16K 11/16

(54) **VENTILEINRICHTUNG FÜR EIN FAHRZEUG**
VALVE DEVICE FOR A VEHICLE
DISPOSITIF DE SOUPAPE POUR UN VÉHICULE

(30) Priorität: 28.09.2021 DE 102021125123
(43) Veröffentlichungstag der Anmeldung: 29.03.2023
(73) Patentinhaber: ZF CV Systems Europe BV, 1170 Brüssel (BE)
(72) Erfinder: DIET, Felix, 31552 Rodenberg (DE); GERLACH, Steffen, 30169 Hannover (DE); STENDER, Axel, 31787 Hameln (DE)
(74) Vertreter: Ohlendorf, Henrike

(56) Entgegenhaltungen:
- EP-A1- 2 263 893
- CN-A- 103 253 102
- DE-A1- 102014 108 557

## Beschreibung

Die Erfindung betrifft eine Ventileinrichtung für ein Fahrzeug, insbesondere ein Niveauregulierungsventil für eine Luftfederungseinrichtung eines Lastkraftfahrzeugs.

Luftfederungseinrichtungen für Lastkraftfahrzeuge weisen üblicherweise eine Einrichtung zur Niveauregelung des Fahrzeugaufbaus gegenüber dem Fahrwerk bzw. der Fahrbahn auf. Bezüglich solcher Niveauregulierungseinrichtungen wird zwischen drei Prinzipien unterschieden: Es gibt mechanische, elektrische und pneumatisch arbeitende Ansteuerungen.

Marktübliche Niveauregulierungsventile für eine elektronische Luftfederung bieten lediglich die Möglichkeit, das Niveau manuell durch einen ins Gerät integrierten Hebel oder mittels externen, pneumatisch mit dem Gerät verbundenen Tasten anzupassen. Ein Gerät, das beide Funktionen ineinander vereint, ist heute nicht bekannt. Vorteilhaft wäre ein solches Gerät zum Beispiel für Kühlerfahrzeuge, bei denen eine Bedienung sowohl von außen also auch aus dem Kühlkoffer möglich sein soll.

CN 103 253 102 B offenbart eine Ventileinrichtung, die manuell oder durch einen elektrischen Betriebsmechanismus in Positionen "Heben", "Senken" und "Fahren" gebracht werden kann.

DE 10 2014 108 557 A1 offenbart eine Luftfederungseinrichtung zum Heben und Senken eines Fahrzeugaufbaus von luftgefederten Fahrzeugen mit Niveauregelung. Die Luftfederungseinreichung weist ein Handbetätigungselement zum manuellen Heben und Senken des Fahrzeugabbaus unter Umgehung einer Niveauregelventileinheit auf. Weiterhin kann die Luftfederungseinrichtung über ein von einem Fahrzustand abhängiges pneumatisches Signal angesteuert werden und kann die Luftfederungseinrichtung über ein vom Fahrzustand abhängiges elektrisches Signal angesteuert werden, um jeweils ohne manuellen Eingriff eine Verschiebung des Handbetätigungselements in eine Position "Fahren" einzuleiten.

EP 2 263 893 A1 offenbart eine Schaltventileinheit zum Be- und Entlüften von Luftfederbälgen zum Heben und Senken eines Aufbaus eines Fahrzeugs. Die Schaltventileinheit ist durch manuelle Betätigung einer Betätigungseinrichtung betätigbar.

Es besteht somit ein Bedarf für eine Ventileinrichtung, die vielseitig bedienbar ist.

Aufgabe der Erfindung ist es, eine derartige Ventileinrichtung anzugeben.

Diese Aufgabe wird durch eine Ventileinrichtung gemäß Anspruch 1 gelöst.

Die abhängigen Ansprüche beinhalten vorteilhafte Weiterbildungen und Verbesserungen der Erfindung entsprechend der nachfolgenden Beschreibung dieser Maßnahmen.

Die Erfindung betrifft eine Ventileinrichtung, insbesondere für ein Fahrzeug, umfassend: ein Gehäuse mit einem ersten Ventil, wobei das Gehäuse einen Drucklufteinlass, einen Druckluftauslass und einen Entlüftungsauslass umfasst und das Ventil einen Kolben und eine Rückstellfeder umfasst. Nach der erfindungsgemäßen Lösung umfasst die Ventileinrichtung zur Betätigung des Ventils eine mechanische Ansteuerung mit einem manuellen Bedienelement, eine elektrische Ansteuerung, sowie eine pneumatische Ansteuerung.

In einer vorteilhaften Ausführungsform umfasst die mechanische Ansteuerung einen Taster und einen Stößel oder einen Hebel, eine Welle, eine Kurvenscheibe und einen Stößel.

In einer weiteren vorteilhaften Ausführungsform umfasst die elektrische Ansteuerung ein Magnetventil zur Steuerung einer Druckluftzufuhr für das Ventil.

In einer weiteren vorteilhaften Ausführungsform umfasst die pneumatische Ansteuerung eine Druckluftleitung und ein externes pneumatisches Bediengerät mit einem Druckluftventil.

Die Ventileinrichtung umfasst ein zweites Ventil, wobei die Ventileinrichtung zur Betätigung des zweiten Ventils eine mechanische Ansteuerung mit einem manuellen Bedienelement, eine elektrische Steuerung und eine pneumatische Steuerung umfasst. Die Ventile sind beispielsweise 2/2-, 3/2- oder ein 4/2-Ventile.

In einer besonders vorteilhaften Ausführungsform sind die elektrische Ansteuerung und die pneumatische Ansteuerung des zweiten Ventils baugleich zu dem ersten Ventil ausgestaltet, und die mechanische Ansteuerung umfasst einen Hebel, eine Welle, eine Kurvenscheibe, sowie einen Stößel für jedes der Ventile. Das erste Ventil ist hierbei insbesondere als ein Belüftungsventil und das zweite Ventil als ein Entlüftungsventil ausgestaltet.

Das zweite Ventil ist intern über zwei pneumatische Verbindungen derart mit dem ersten Ventil verbunden, dass bei einer Betätigung des ersten Ventils Druckluft vom Drucklufteinlass durch das erste und zweite Ventil zum Druckluftauslass durchgeleitet wird und bei

Betätigung des zweiten Ventils Druckluft vom Druckluftauslass durch das zweite und erste Ventil zum Entlüftungsauslass durchgeleitet wird.

Die Ventileinrichtung gemäß der Erfindung ist vorteilhafterweise für ein Fahrzeug, insbesondere ein Lastkraftfahrzeug, sowie Anhängerfahrzeuge mit einer Luftfederungseinrichtung verwendbar.

Vorteilhafte Ausführungsbeispiele der Erfindung sind in den Zeichnungen dargestellt und werden nachfolgend anhand der Figuren näher erläutert.

Es zeigen:
- Fig. 1: eine Ventileinrichtung gemäß der Erfindung;
- Fig. 2: ein bevorzugtes Ausführungsbeispiel der Ventileinrichtung der Fig. 1 in einem Querschnitt;
- Fig. 3: das Ausführungsbeispiel der Ventileinrichtung der Fig. 2 nach einer manuellen Betätigung;
- Fig. 4: ein bevorzugtes Ausführungsbeispiel der Ventileinrichtung der Fig. 1 mit einer elektrischen Ansteuerung in einem Querschnitt; und
- Fig. 5: ein bevorzugtes Ausführungsbeispiel der Ventileinrichtung der Fig. 1 mit einer pneumatischen Ansteuerung in einem Querschnitt.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

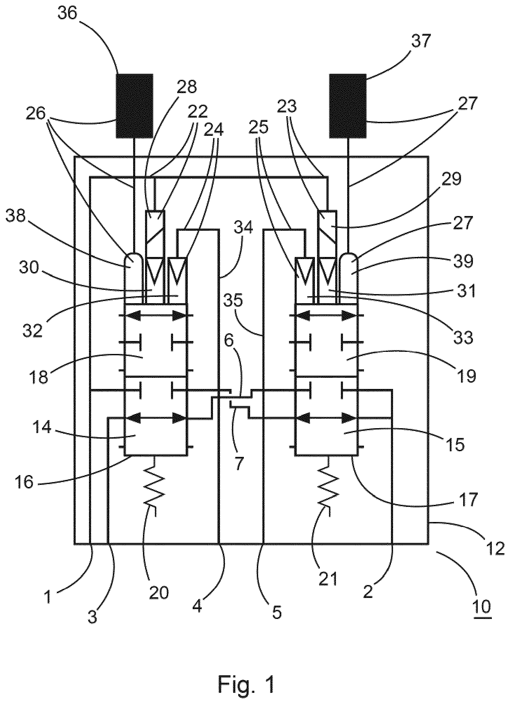

Fig. 1 zeigt schematisch eine Ventileinrichtung 10 mit einem Gehäuse 12, in dem ein erstes Ventil 14 und ein zweites Ventil 15 angeordnet sind, und das einen Drucklufteinlass 1 für eine Druckluftzufuhr, einen Druckluftauslass 2 und einen Entlüftungsauslass 3 aufweist. Das erste Ventil 14 ist insbesondere ein Belüftungsventil und weist einen Anschluss auf, der mit dem Drucklufteinlass 1 verbunden ist, und einen Anschluss, der mit dem Entlüftungsauslass 3 verbunden ist. Das zweite Ventil 15 ist insbesondere ein Entlüftungsventil und weist zwei Anschlüsse auf, die über zwei pneumatische Verbindungen 6, 7 innerhalb der Ventileinrichtung 10 mit zwei Anschlüssen des Ventils 14 verbunden sind, und zwei Anschlüsse, die mit dem Druckluftauslass 2 verbunden sind. Die pneumatischen Verbindungen 6, 7 und die Anschlüsse der Ventile 14, 15 sind insbesondere derart ausgestaltet, dass bei Betätigung des Ventils 14 Druckluft vom Drucklufteinlass 1 durch die Ventile 14, 15 zum Druckluftauslass 2 durchgeleitet wird und bei Betätigung des Ventils 15 Druckluft vom Druckluftluftauslass 2 durch die Ventile 14, 15 zum Entlüftungsauslass 3 durchgeleitet wird.

Die beiden Ventile 14, 15 sind in diesem Ausführungsbeispiel 4/2-Ventile und weisen jeweils einen Kolben 18 bzw. 19 auf, in der Fig. 1 nur schematisch dargestellt, mit jeweils einer Rückstellfeder 20 bzw. 21, und ein Ventilgehäuse 16 bzw. 17, in dem sich jeweils der Kolben 18, 19 bewegt. Das Ventil 15 kann beispielsweise aber auch als ein 3/2-Ventil mit nur einem Anschluss für den Druckluftluftauslass 2 ausgestaltet sein.

Ventileinrichtungen dieser Art werden üblicherweise in Luftfederungsanlagen von Lastkraftwagen verwendet und sind wohlbekannt. Wird das Ventil 14 betätigt und hierdurch dessen Kolben 18 verschoben, so wird über die Anschlüsse 1 und 2 ein Druck für eine Luftfederung aufgebaut. Wird das Ventil 15 betätigt und dessen Kolben 19 verschoben, so wird über die Anschlüsse 2 und 3 der Druck abgelassen. Wird keines der Ventile 14, 15 betätigt, so wird der Druck an dem Druckluftluftauslass 2 aufrechterhalten.

Zur Betätigung des Kolbens weist jedes der Ventile 14, 15 nach der Erfindung zur Steuerung einer Druckluftzufuhr und einer Entlüftung sowohl eine elektrische Ansteuerung 22 bzw. 23, eine pneumatische Ansteuerung 24 bzw. 25, sowie eine mechanische Ansteuerung 26, 27 auf. Die elektrische Ansteuerung 22 des Ventils 14 weist hierbei ein Magnetventil 30 mit einem Magneten 28 für das Ventil 14 auf. Die pneumatische Ansteuerung 24 weist ein pneumatisches Ventil 32, das über eine pneumatische Leitung 34 betätigbar ist, auf. Die mechanische Ansteuerung 26, 27 weist ein manuelles, integriertes Bedienelement, beispielsweise mit einem Hebel oder zwei Tastern, auf.

Das Ventil 15 weist eine elektrische Ansteuerung 23 mit einem Magnetventil 31 auf, das einen Magneten 29 aufweist. Die pneumatische Ansteuerung 25 weist ein pneumatisches Ventil 33 auf, das über eine pneumatische Leitung 35 betätigbar ist. Die pneumatische Leitung 34 ist hierbei mit dem pneumatischen Anschluss 4 verbunden und die pneumatische Leitung 35 ist mit dem pneumatischen Anschluss 5 verbunden. Durch die Betätigung der Ventile 14 bzw. 15 kann beispielsweise ein Fahrzeugaufbau gehoben oder gesenkt werden.

In dem Ausführungsbeispiel der Fig. 1 weist das Ventil 14 eine mechanische Ansteuerung 26 mit einem Taster 36 und einem Stößel 38 auf, und das Ventil 15 weist eine mechanische Ansteuerung 27 mit einem Taster 37 und einem Stößel 39 auf. Bei Betätigung des Tasters 36 wird auf bekannte Weise über den Stößel 38 der Kolben 14 nach unten gedrückt und bei Betätigung des Tasters 37 wird über den Stößel 39 der Kolben 15 nach unten gedrückt.

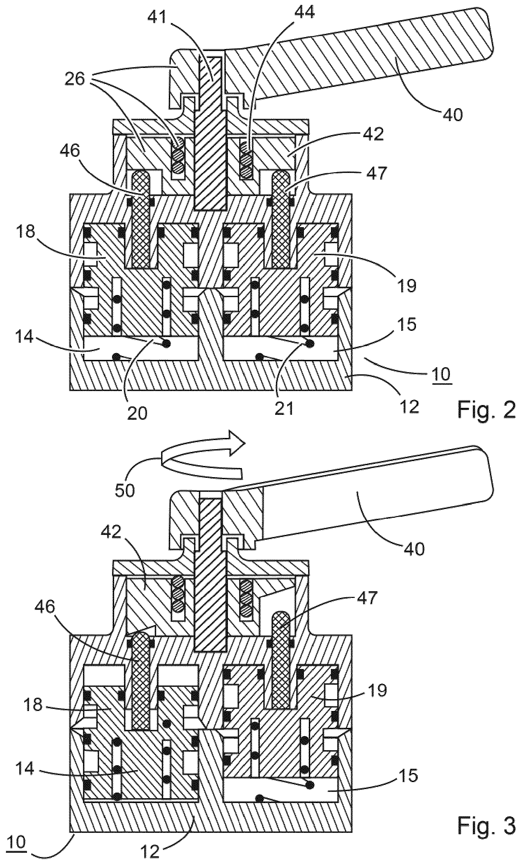

In der Fig. 2 ist ein bevorzugtes Ausführungsbeispiel der Ventileinrichtung 10 in einem Querschnitt dargestellt. Die beiden Ventile 14, 15 sind in dem Gehäuse 12 der Ventileinrichtung 10 angeordnet, wobei die Ventilgehäuse der Ventile 14, 15 im Wesentlichen durch das Gehäuse 12 gebildet sind. Die Kolben 18, bzw. 19 werden jeweils durch einen Stößel 46 bzw. 47 durch die mechanische Ansteuerung 26 verschoben. Die mechanische Steuerung 26 weist in diesem Ausführungsbeispiel einen Hebel 40 mit einer Welle 41, eine Kurvenscheibe 42 sowie eine Drehfeder 44 auf. Die Kurvenscheibe 42 ist an der Welle 41 befestigt, und bei Betätigung des Hebels 40 wird durch die Kurvenscheibe 42 entweder der Stößel 46 oder der Stößel 47 nach unten gedrückt. Hierbei wird eine Drehbewegung des Hebels 42 durch die Kurvenscheibe 42 in eine translatorische Bewegung umgesetzt. Die Drehfeder 44 bewirkt eine Kraft in Richtung der Grundstellung des Hebels 40.

Die Kurvenscheibe 42 weist eine Fläche mit einer Steigung auf, derart, dass bei Betätigung des Hebels 40 gegen den Uhrzeigersinn der Stößel 46 und hierdurch der Kolben 18 nach unten gedrückt wird und bei Betätigung des Hebels 40 im Uhrzeigersinn der Stößel 47 und hierdurch der Kolben 19 nach unten gedrückt wird. Die Betätigung des Hebels 40 gegen den Uhrzeigersinn bewirkt hierbei einen Belüftungsvorgang und die Betätigung des Hebels 40 im Uhrzeigersinn bewirkt einen Entlüftungsvorgang. Ist der Hebel 40 in der Grundstellung, so wird der eingestellte Druck gehalten.

In einem Ausführungsbeispiel ist in der Fig. 3 der Hebel 26 gegen den Uhrzeigersinn gedreht, durch in der Fig. 3 durch einen Pfeil 50 angedeutet. Die Kurvenscheibe 42 drückt hierdurch den Stößel 46 und damit den Kolben 18 nach unten. Der Stößel 47 bleibt entlastet, so dass in diesem Ausführungsbeispiel ein Belüftungsvorgang durch die Betätigung des Hebels 26 bewirkt wird.

Die weiteren Bezugszeichen der Figuren 2 und 3 entsprechen denen der Fig. 1. Die elektrischen Ansteuerungen 22, 23 sowie die pneumatischen Ansteuerungen 24, 25 sind in Fig. 2 und Fig. 3 aus Gründen der Übersichtlichkeit nicht dargestellt.

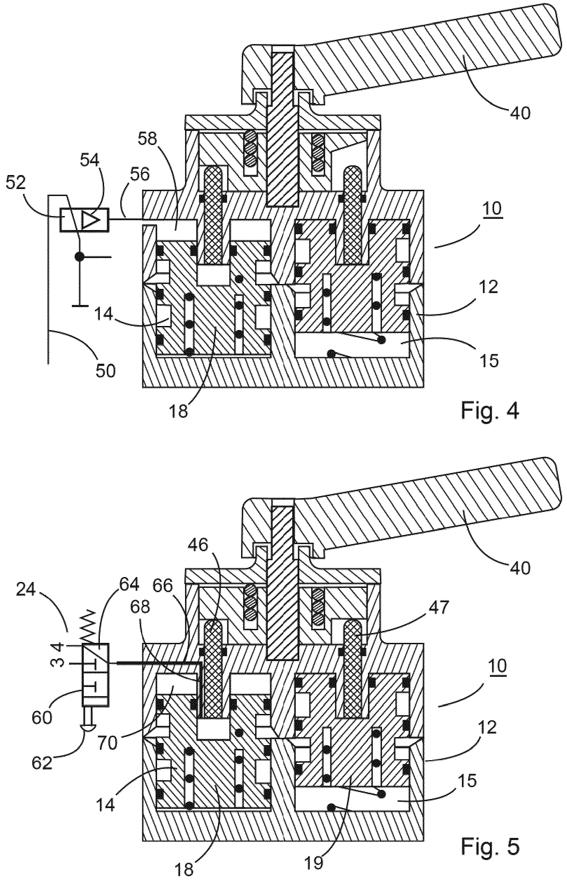

Ein Ausführungsbeispiel für eine elektrische Ansteuerung 22 für das Ventil 14 der Ventileinrichtung 10 ist schematisch in der Fig. 4 dargestellt. Die elektrische Ansteuerung 22 weist eine elektrische Steuerleitung 50 auf, durch die ein Magnet 52 aktivierbar ist und bestromt werden kann. Bei einer Bestromung des Magneten 52 wird ein Ventil 54 geöffnet, wodurch Druckluft aus einem Druckluftvorratsbehälter, in der Fig. 4 nicht dargestellt, über eine Zuleitung 56 dem Ventil 14 zugeführt wird, so dass der Kolben 18 verschoben wird. Die Zuleitung 56 ist hierbei derart an das Ventil 14 angeschlossen, dass bei einer Aktivierung des Magneten 52 über das Ventil 54 Druckluft in einen Hohlraum 58 über dem Kolben 14 zugeführt wird, so dass sich der Kolben 14 verschiebt. Die elektrische Ansteuerung 23 ist baugleich zu der elektrischen Ansteuerung 22, aber in der Fig. 4 nicht dargestellt.

In der Fig. 5 ist schematisch ein Ausführungsbeispiel für eine pneumatische Ansteuerung 24 für das Ventil 14 dargestellt. Die pneumatische Ansteuerung 24 weist ein externes, pneumatisches Bediengerät 60 mit einem Taster 62 auf, durch das bei Bedienung des Tasters 62 über ein Druckluftventil 64 und eine Zuleitung 66 Druckluft aus einem Druckluftvorratsbehälter dem Ventil 14 zugeführt werden kann. Die Zuleitung 66 ist in diesem Ausführungsbeispiel mit einem Ende in eine zentrale Führung 68 des Kolbens 14 integriert, sodass bei Betätigung ist des Tasters 62 ein zentraler Hohlraum 70 über den Kolben 14 unter Druck gesetzt wird, wodurch der Kolben 14 verschoben wird. Die pneumatische Ansteuerung 25 ist baugleich zu der pneumatischen Ansteuerung 22, aber in der Fig. 5 nicht dargestellt.

In einem bevorzugten Ausführungsbeispiel ist die Ventilsteuerung für das Ventil 15, insbesondere die elektrische Ansteuerung und die pneumatische Ansteuerung, baugleich zu dem Ventil 14 ausgeführt. Die in den Figuren 1 bis 5 dargestellten Ventile sind 4/2-Ventile, die vorgeschlagene Ventilsteuerung lässt sich jedoch auch für viele weitere Ventile, wie beispielsweise 2/2-, 3/2- oder 5/2-Ventile, verwenden.

Die beschriebene Ventilsteuerung ermöglicht den Aufbau eines Ventils mit einem dreifach betätigten Kolben. Während hierbei die mechanische Ansteuerung einen Kolben direkt mechanisch betätigt, können die elektrische Ansteuerung und die pneumatische Ansteuerung aus der Ferne bedient werden. Für die elektrische Ansteuerung und für pneumatische Ansteuerung stehen für jedes Ventil zwei gegeneinander und zur Umgebung abgedichtete Kammern zur Verfügung. So wird eine gegenseitige Beeinflussung zwischen den Steuerungen ausgeschlossen. Um den Kolben eines Ventils zu bestätigen, genügt die Anforderung von einer Kontrollmöglichkeit. Wollen mehrere Kontrollmöglichkeiten denselben Kolben gleichzeitig betätigen, so hat dies keinen weiteren Effekt und der Kontrollbefehl wird weiterhin ausgeführt.

### Bezugszeichenliste (Teil der Beschreibung)

- 1: Drucklufteinlass
- 2: Druckluftauslass
- 3: Entlüftungsauslass
- 4, 5: pneumatische Anschlüsse
- 6, 7: pneumatische Verbindungen
- 10: Ventileinrichtung
- 12: Gehäuse
- 14, 15: Ventile
- 16, 17: Ventilgehäuse
- 18, 19: Kolben
- 20, 21: Rückstellfedern
- 22, 23: elektrische Ansteuerungen
- 24, 25: pneumatische Ansteuerungen
- 26, 27: mechanische Ansteuerungen
- 28, 29: Magnete
- 30, 31: Magnetventile
- 32, 33: pneumatische Ventile
- 34, 35: pneumatische Leitungen
- 36, 37: Taster
- 38, 39: Stößel
- 40: Hebel
- 41: Welle
- 42: Kurvenscheibe
- 44: Drehfeder
- 46, 47: Stößel
- 50: Steuerleitung
- 52: Magnet
- 54: Ventil
- 56: Zuleitung
- 58: Hohlraum
- 60: pneumatisches Bediengerät
- 62: Taster
- 64: Druckluftventil
- 66: Zuleitung
- 68: zentrale Führung
- 70: Hohlraum

## Patentansprüche

1. Ventileinrichtung (10), insbesondere für ein Fahrzeug, umfassend: ein Gehäuse (12) mit einem ersten Ventil (14), wobei das Gehäuse einen Drucklufteinlass (1), einen Druckluftluftauslass (2) und einen Entlüftungsauslass (3) umfasst und das Ventil (12) einen Kolben (18) und eine Rückstellfeder (20) umfasst, wobei zur Betätigung des Ventils (14) die Ventileinrichtung (10) eine mechanische Ansteuerung (26) mit einem manuellen Bedienelement (40, 41, 42, 44, 46), eine elektrische Ansteuerung (22) und eine pneumatische Ansteuerung (24) umfasst,
umfassend ein zweites Ventil (15), wobei die Ventileinrichtung zur Betätigung des zweiten Ventils eine mechanische Ansteuerung (27) mit einem manuellen Bedienelement (40, 41, 42, 44, 47), eine elektrische Ansteuerung (23) und eine pneumatische Ansteuerung (25) umfasst, wobei das erste Ventil (14) als ein Belüftungsventil und das zweite Ventil (15) als ein Entlüftungsventil ausgestaltet sind,
**dadurch gekennzeichnet, dass**
das zweite Ventil (15) intern über zwei pneumatischen Verbindungen (6, 7) derart mit dem ersten Ventil (14) verbunden ist, dass bei einer Betätigung des ersten Ventils (14) Druckluft vom Drucklufteinlass (1) durch das erste und zweite Ventil (14, 15) zum Druckluftluftauslassanschluss (2) durchgeleitet wird und bei Betätigung des zweiten Ventils (15) Druckluft vom Druckluftluftauslassanschluss (2) durch das zweite und erste Ventil (14, 15) zum Entlüftungsauslass (3) durchgeleitet wird.

2. Ventileinrichtung (10) nach Anspruch 1, wobei die mechanische Ansteuerung (26) einen Taster (36) und einen Stößel (38) oder einen Hebel (40), eine Welle (41), eine Kurvenscheibe (42), eine Drehfeder (44) und einen Stößel (46) umfasst.

3. Ventileinrichtung (10) nach Anspruch 1 oder 2, wobei die elektrische Ansteuerung (22) ein Magnetventil (52, 54) zur Steuerung einer Druckluftzufuhr für das Ventil (14) umfasst.

4. Ventileinrichtung (10) nach Anspruch 1, 2 oder 3, wobei die pneumatische Ansteuerung (24) eine Druckluftleitung (66, 68) und ein externes pneumatisches Bediengerät (60) mit einem Druckluftventil (64) umfasst.

5. Ventileinrichtung (10) nach einem der vorhergehenden Ansprüche, wobei die Ventile (14, 15) 2/2-, 3/2- oder 4/2-Ventile sind.

6. Ventileinrichtung (10) nach einem der vorhergehenden Ansprüche, wobei die elektrische Ansteuerung (23) und die pneumatische Ansteuerung (25) des zweiten Ventils (15) baugleich zu dem ersten Ventil (14) ausgestaltet sind, und die mechanische Ansteuerung (26, 27) der Ventileinrichtung (10) einen Hebel (40), eine Welle (41), eine Kurvenscheibe (42), eine Drehfeder (44), sowie einen Stößel für jedes der Ventile (14, 15) umfasst.

7. Fahrzeug, insbesondere Lastkraftfahrzeug oder Anhängerfahrzeug, mit einer Ventileinrichtung (10) nach einem der Ansprüche 1 bis 6.

## Claims

1. Valve device (10), in particular for a vehicle, comprising: a housing (12) having a first valve (14), wherein the housing comprises a compressed air inlet (1), a compressed air outlet (2) and a venting outlet (3), and the valve (12) comprises a piston (18) and a return spring (20), wherein for actuating the valve (14), the valve device (10) comprises a mechanical control means (26) having a manual operating element (40, 41, 42, 44, 46), an electrical control means (22) and a pneumatic control means (24),
comprising a second valve (15), wherein the valve device for actuating the second valve comprises a mechanical control means (27) having a manual operating element (40, 41, 42, 44, 47), an electrical control means (23) and a pneumatic control means (25), wherein the first valve (14) is designed as a ventilation valve and the second valve (15) is designed as a venting valve,
**characterized in that**
the second valve (15) is internally connected to the first valve (14) via two pneumatic connections (6, 7), such that when the first valve (14) is actuated, compressed air is passed from the compressed air inlet (1) through the first and second valves (14, 15) to the compressed air outlet connection (2), and when the second valve (15) is actuated, compressed air is passed from the compressed air outlet connection (2) through the second and the first valve (14, 15) to the venting outlet (3).

2. Valve device (10) according to claim 1, wherein the mechanical control means (26) comprises a button (36) and a tappet (38) or a lever (40), a shaft (41), a cam disc (42), a torsion spring (44) and a tappet (46).

3. Valve device (10) according to claim 1 or 2, wherein the electrical control means (22) comprises a solenoid valve (52, 54) for controlling a compressed air supply for the valve (14).

4. Valve device (10) according to claim 1, 2 or 3, wherein the pneumatic control means (24) comprises a compressed air line (66, 68) and an external pneumatic operating device (60) having a compressed air valve (64).

5. Valve device (10) according to any of the preceding claims, wherein the valves (14, 15) are 2/2, 3/2 or 4/2 valves.

6. Valve device (10) according to any of the preceding claims, wherein the electrical control means (23) and the pneumatic control means (25) of the second valve (15) are designed to be structurally identical to the first valve (14), and the mechanical control means (26, 27) of the valve device (10) comprises a lever (40), a shaft (41), a cam disc (42), a torsion spring (44), and a tappet for each of the valves (14, 15).

7. Vehicle, in particular a heavy goods vehicle or a trailer vehicle, comprising a valve device (10) according to any of claims 1 to 6.

## Revendications

1. Dispositif à soupapes (10), en particulier pour un véhicule, comprenant : un boîtier (12) comportant une première soupape (14), dans lequel le boîtier comprend une entrée d'air comprimé (1), une sortie d'air comprimé (2) et une sortie d'évacuation d'air (3), et la soupape (12) comprend un piston (18) et un ressort de rappel (20), dans lequel le dispositif à soupapes (10) comprend une commande mécanique (26) comportant un élément de manipulation manuel (40, 41, 42, 44, 46), une commande électrique (22) et une commande pneumatique (24) pour l'actionnement de la soupape (14),
comprenant une seconde soupape (15), dans lequel le dispositif à soupapes comprend une commande mécanique (27) comportant un élément de manipulation manuel (40, 41, 42, 44, 47), une commande électrique (23) et une commande pneumatique (25) pour l'actionnement de la seconde soupape, dans lequel la première soupape (14) est conçue sous forme de soupape d'aération et la seconde soupape (15) est conçue sous forme de soupape d'évacuation d'air,
**caractérisé en ce que**
la seconde soupape (15) est reliée de manière interne à la première soupape (14) par l'intermédiaire de deux liaisons pneumatiques (6, 7) de telle sorte que, lors d'un actionnement de la première soupape (14), de l'air comprimé est acheminé depuis l'entrée d'air comprimé (1) à travers la première et la seconde soupape (14, 15) jusqu'au raccord de sortie d'air comprimé (2) et, lors d'un actionnement de la seconde soupape (15), de l'air comprimé est acheminé depuis le raccord de sortie d'air comprimé (2) à travers la seconde et la première soupape (14, 15) jusqu'à la sortie d'évacuation d'air (3).

2. Dispositif à soupapes (10) selon la revendication 1, dans lequel la commande mécanique (26) comprend un bouton-poussoir (36) et un poussoir (38) ou un levier (40), un arbre (41), une came (42), un ressort de torsion (44) et un poussoir (46).

3. Dispositif à soupapes (10) selon la revendication 1 ou 2, dans lequel la commande électrique (22) comprend une électrovalve (52, 54) pour la commande d'une alimentation en air comprimé pour la soupape (14).

4. Dispositif à soupapes (10) selon la revendication 1, 2 ou 3, dans lequel la commande pneumatique (24) comprend une conduite d'air comprimé (66, 68) et un appareil de manipulation pneumatique externe (60) comportant une soupape d'air comprimé (64).

5. Dispositif à soupapes (10) selon l'une des revendications précédentes, dans lequel les soupapes (14, 15) sont des soupapes 2/2, 3/2 ou 4/2 voies.

6. Dispositif à soupapes (10) selon l'une des revendications précédentes, dans lequel la commande électrique (23) et la commande pneumatique (25) de la seconde soupape (15) sont conçues de manière structurellement identique à la première soupape (14), et la commande mécanique (26, 27) du dispositif à soupapes (10) comprend un levier (40), un arbre (41), une came (42), un ressort de torsion (44), ainsi qu'un poussoir pour chacune des soupapes (14, 15).

7. Véhicule, en particulier camion ou véhicule tracté, comportant un dispositif à soupapes (10) selon l'une des revendications 1 à 6.
